# EUROPEAN PATENT APPLICATION

(11) **EP 2 500 875 A1**
(43) Date of publication of application: **19.09.2012**
(21) Application number: 10791243.8
(22) Date of filing: 21.04.2010
(51) Int. Cl.: G07F 7/08

(54) **APPLICATION METHOD OF MOBILE TERMINAL ELECTRONIC WALLET AND MOBILE TERMINAL**

(30) Priority: 31.12.2009 CN 200910260770
(71) Applicant: ZTE Corporation, Shenzhen, Guangdong 518057 (CN)
(72) Inventor: GUI, Zuhong, Shenzhen Guangdong 518057 (CN)
(74) Representative: Waddington, Richard
(86) International application number: PCT/CN2010/071985
(87) International publication number: WO 2010/148737

(57) **Abstract**

Disclosed in the present invention is an application method for a mobile terminal electronic wallet, including: monitoring a transaction event carried out by the mobile terminal via the NFC chip; when the transaction event happens, acquiring transaction message regarding the transaction event sent by a universal integrated circuit card (UICC) via the NFC chip; and sending the transaction message to a JAVA module, starting up a corresponding JAVA application, and providing the consumption situation of the transaction event to a user. Also disclosed in the present invention is a mobile terminal, wherein, an acquiring module is used for acquiring transaction message regarding the transaction event sent by a UICC via the NFC chip after a monitoring module monitors the transaction event; and a sending module is used for sending the transaction message to a JAVA module and starting up a corresponding JAVA application. By way of the method and mobile terminal in the present invention, the current problem that the consumption situation of the electronic wallet can only be checked manually but cannot be displayed automatically is solved.

## Description

### Technical Field

The present invention relates to the communication field, and particularly, to an application method for a mobile terminal electronic wallet and a mobile terminal.

### Background of the Related Art

With the development of the near field communication (NFC) technology, the near field consumption also has been significantly changed. The mobile terminal such as mobile phone becomes a secure, convenient, rapid and fashionable contactless payment and ticket tool. The mobile terminal becomes a transportation card and a bank card, so that the mobile phone can be swiped for consumption just as swiping the transportation card and the bank card. People especially like the easy usage, convenience and rapidness of contactless payment of the NFC and wish to no longer carry on a wallet. The transaction can be done only by making the mobile terminal approach the device terminal without presenting the payment card.

The solutions for realizing near field consumption with the NFC technology are mainly as follows: 1. profiled pasting card in which a token is pasted on the mobile phone, such as the Bank in Palm service in Chongqing city; 2. SIMpass, i.e. dual SIM cards, such as Watchdata solution; 3. NFC, wherein an NFC chip is integrated in the mobile phone and the single wire protocol (SWP) SIM card is not supported; 4. eNFC, wherein the chip and SIM card supporting the SWP protocol have to be integrated; 5. 2.4G radio frequency (abbreviated as RF) SIM, wherein a 2.4G communication module is integrated in the SIM card, and the SIM card has to be directly changed. In this case, the chip and SIM card supporting the SWP protocol need to be integrated with eNFC, which currently is a very popular technical solution.

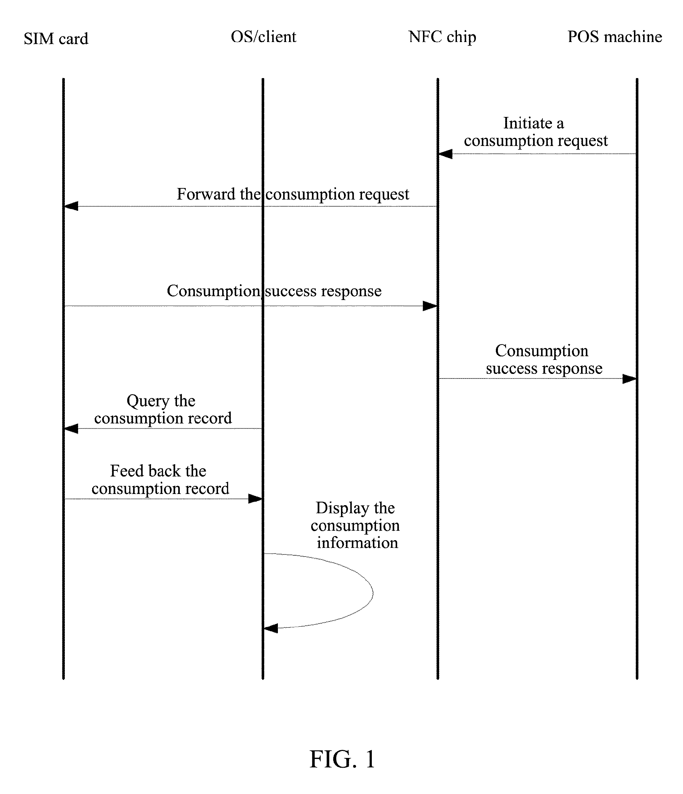

Since NFC has broad market prospect, the mobile operators are positively promoting the development of this industry chain, and the electronic wallet and electronic ticket service are especially valued. Currently, the process of using the NFC electronic wallet to consume is as shown in FIG. 1, after the NFC chip of the mobile phone is activated, micro payment function can be realized by a POS machine when the mobile phone is in the card emulation state.

Referring to FIG. 1, the POS machine initiates a consumption request, the NFC chip forwards the request to the SIM card, the SIM card would respond, and after the transaction is over, the user can check the transaction situation of the mobile phone wallet by opening the JAVA client.

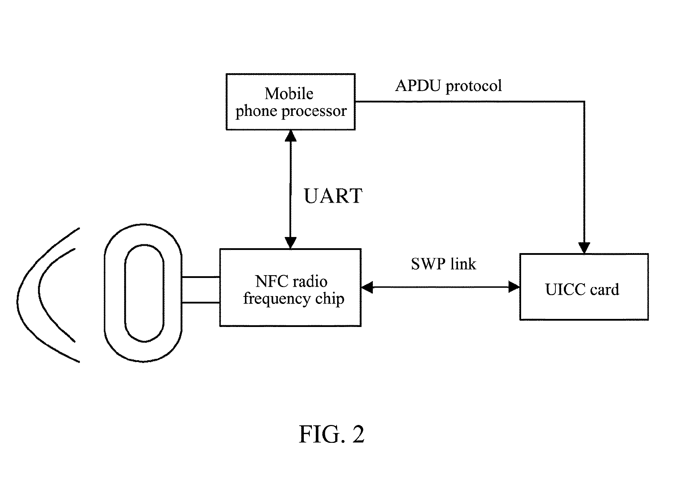

FIG. 2 is a schematic diagram of the working principle of consuming using an NFC electronic wallet, referring to FIG. 2, it includes a universal integrated circuit card (UICC), an NFC radio frequency chip (MicroRead) and a mobile phone processor. The part relevant to the application is totally placed in the smart SIM card, i.e. UICC, and the MicroRead is integrated in the mainboard of the mobile phone. The MicroRead communicates with the mobile phone processor via a UART interface, and communicates with the application part in the UICC via the SWP protocol. After the mobile phone has transacted with the POS machine, the UICC can send message to the mobile phone processor via the MicroRead.

There is a problem in the above operation: assuming that the mobile phone is in the standby interface, after the mobile phone has carries out a transaction, the user will habitually check the balance of the electronic wallet, however, currently, the application carry out a query manually on the market, the user has to enter JAVA and then start up the application, which greatly affects the user experience.

In summary, it can be known that the problem that the balance of the electronic wallet can only be checked manually and cannot be displayed automatically always exists in the related art, therefore, it is necessary to propose an improved technical means to solve this problem.

### Summary of the Invention

The present invention is proposed in view of the problem in the related art that the balance of the electronic wallet can only be checked manually and cannot be displayed automatically, for this end, the main object of the present invention is to provide an application method for a mobile terminal electronic wallet and a mobile terminal, wherein

the present invention provides an application method for a mobile terminal electronic wallet with an near field communication (NFC) chip being integrated into the mobile terminal, including: monitoring a transaction event carried out by the mobile terminal via the NFC chip; when the transaction event happens, acquiring transaction message regarding the transaction event sent by a universal integrated circuit card (UICC) via the NFC chip; and sending the transaction message to a JAVA module, starting up a corresponding JAVA application, and providing the consumption situation of the transaction event to a user.

Preferably, sending the transaction message to a JAVA module and starting up a corresponding JAVA application further comprises: the JAVA module receiving the transaction message and invoking a PUSH interface to start up the corresponding JAVA application.

Preferably, invoking a PUSH interface to start up the corresponding JAVA application further comprises: acquiring PUSH register information about the application from a set PUSH register information list; and parsing the PUSH register information about the application and starting up the corresponding JAVA application.

The present invention provides a mobile terminal in which an NFC chip is integrated, comprising a JAVA module and further comprising a monitoring module, an acquiring module, a sending module, and a display module, wherein
the monitoring module is used for monitoring a transaction event carried out by the mobile terminal via the NFC chip; the acquiring module is used for acquiring a transaction message regarding the transaction event sent by a UICC via the NFC chip after the monitoring module monitors the transaction event; the sending module is used for sending the transaction message to a JAVA module and starting up a corresponding JAVA application; and the display module is used for providing the consumption situation regarding the transaction event to a user.

Preferably, this mobile terminal further comprises a JAVA virtual machine, wherein
the JAVA module is further used for receiving the transaction message and starting up the JAVA virtual machine; and the JAVA virtual machine is used for invoking a PUSH interface to start up the corresponding JAVA application.

Preferably, the JAVA virtual machine is further used for acquiring PUSH register information about the application from a set PUSH register information list; and parsing the PUSH register information about the application and starting up the corresponding JAVA application.

As compared to the related art, in the above technical solution according to the present invention, the transaction message sent by the UICC via the NFC chip is used to activate the PUSH function of JAVA and start up a relevant JAVA application, thereby realizing the purpose of automatically starting up the application, thus automatically displaying the consumption situation to the user and enhancing user experience.

### Brief Description of Drawings

FIG. 1 is a schematic diagram of the process of using an NFC electronic wallet application to consume in the related art;
FIG. 2 is a schematic diagram of the working principle of using an NFC electronic wallet application to consume in the related art;
FIG. 3 is a flowchart of an application method for a mobile terminal electronic wallet according to the embodiments of the present invention;
FIG. 4 is a flowchart of starting up PUSH when a mobile terminal carries out a transaction event according to the embodiments of the present invention;
FIG. 5 is a flowchart of the process of starting up an application by PUSH according to the embodiments of the present invention; and
FIG. 6 is a block diagram of a mobile terminal according to the embodiments of the present invention.

### Preferred Embodiments of the Present Invention

The main concept of the present invention lies in: when the mobile terminal uses the electronic wallet to consume, the transaction message sent by the UICC via the NFC chip is used to activate the PUSH function of JAVA and start up the relevant JAVA application, so as to realize the purpose of automatically starting up the application. It needs to be noted that a JAVA application to be automatically started up needs to be installed on the mobile terminal according to the embodiments of the present invention, and at the same time, this application is PUSH registered.

In order to make the object, technical solution and advantages of the present invention more clear, the present invention will be further described in detail in conjunction with the accompanying drawings and particular embodiments.

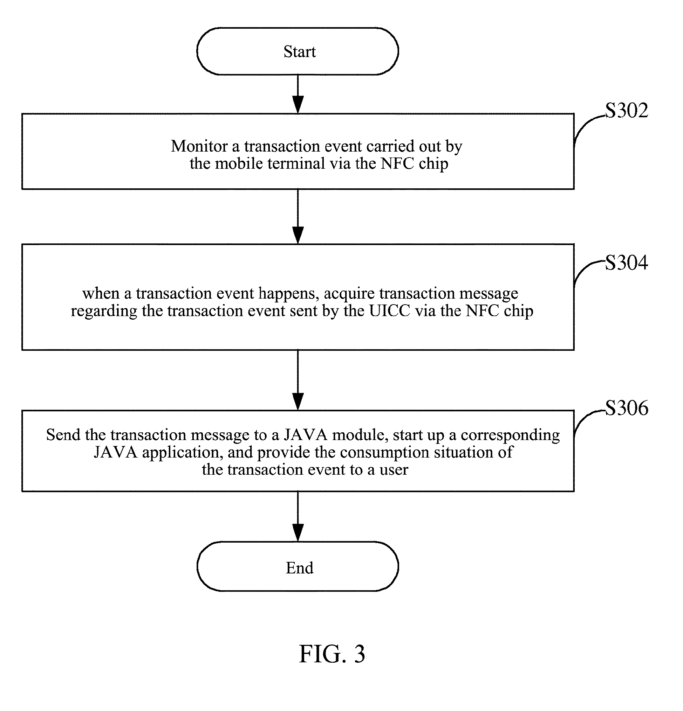

FIG. 3 is a flowchart of an application method for a mobile terminal electronic wallet according to the embodiments of the present invention, and as shown in the figure, this method includes:
in step S302, it is to monitor a transaction event carried out by the mobile terminal via the NFC chip.

In step S304, when a transaction event happens, it is to acquire a transaction message regarding the transaction event sent by the UICC via the NFC chip.

In step S306, it is to send the transaction message to a JAVA module, start up a corresponding JAVA application, and provide the consumption situation of the transaction event to a user.

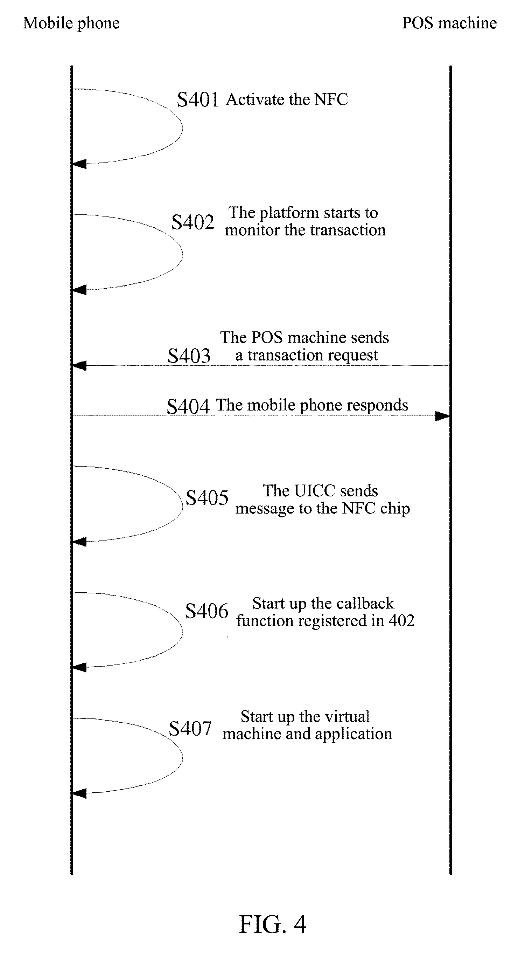

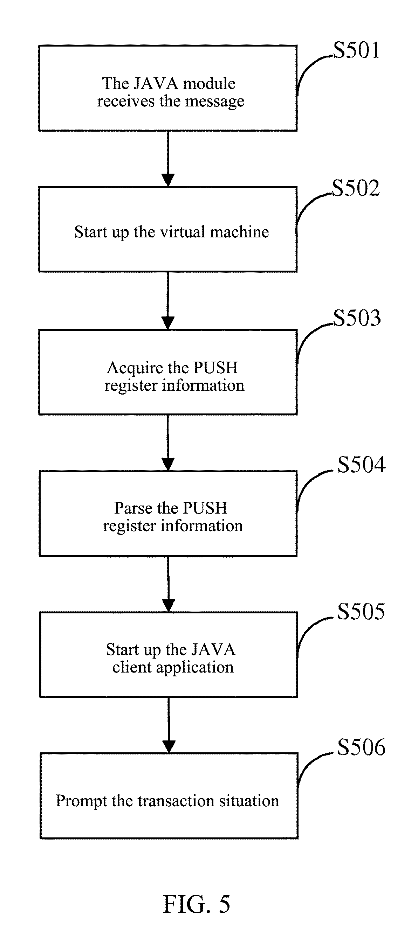

Hereinafter, the above processing details will be described in detail in conjunction with FIG. 4 and FIG. 5. FIG. 4 is a flowchart of starting up PUSH when a mobile terminal carries out a transaction event according to the embodiments of the present invention. Hereinafter, a mobile phone is taken as an example for description. As shown in FIG. 4, this processing flow includes:
in step S401, it is to activate the NFC chip.

In step S402, the platform starts to monitor a card swiping event and registers for a callback function A, and A is mainly used for sending message to the upper application, such as transaction message.

In step S403, the POS machine sends a transaction request to carry out a consumption operation.

In step S404, the mobile phone responds and feeds back the information of whether the operation is successful to the POS machine.

In step S405, the UICC sends message to the NFC chip.

In step S406, after having received the message, the NFC chip will start up the callback function A registered in the step S402, and if no message is received, no operation will be performed.

In step S407, it is to start up the virtual machine and application and send the message to the JAVA module.

The above processing corresponds to the steps S302 and S304.

FIG. 5 is a flowchart of the process of starting up an application by PUSH according to the embodiments of the present invention. It needs to be noted that the self-starting application must have been PUSH registered, and the register information is stored into a PUSH register information list in the JAVA module. As shown in FIG. 5, this processing flow includes:
in step S501, the JAVA module receives message.

In step S502, the JAVA module starts up the JAVA virtual machine.

In step S503, the JAVA virtual machine acquires the PUSH register information about the application from the PUSH register information list.

In step S504, the JAVA virtual machine parses the PUSH register information about the application and sets the information about the application to be started up.

In step S505, it is to start up the JAVA client application.

In step S506, it is to provide the consumption situation about the transaction event to the user, for example, it is to prompt the user whether to display the consumption situation on the screen of the mobile terminal, if the user selects displaying, then it is to display the balance of the mobile phone wallet on the screen, etc.

The above processing corresponds to step S306.

After the above processing, the consumption situation can be prompted to the user automatically, enhancing the user experience.

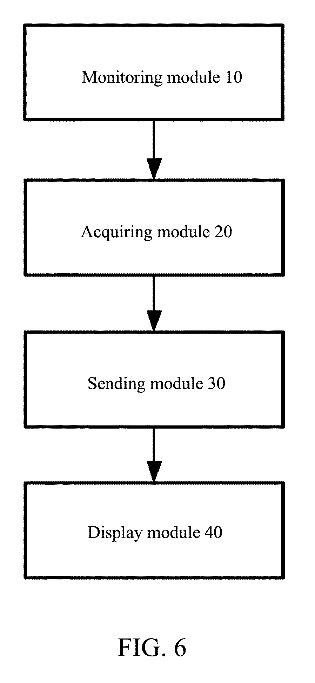

FIG. 6 is a block diagram of a mobile terminal in which an NFC chip is integrated according to the embodiments of the present invention. As shown in FIG. 6, this mobile terminal comprises: a monitoring module 10, an acquiring module 20, a sending module 30, and a display module 40, wherein
the monitoring module 10 is used for monitoring a transaction event carried out by the mobile terminal via the NFC chip.

The acquiring module 20 is used for acquiring transaction message regarding the transaction event sent by a UICC via the NFC chip after the monitoring module 10 monitors the transaction event.

The sending module 30 is used for sending the transaction message to a JAVA module and starting up a corresponding JAVA application.

The display module 40 is used for providing the consumption situation regarding the transaction event to a user.

Moreover, this mobile terminal further comprises: a JAVA module for receiving the transaction message and starting up a JAVA virtual machine; and the JAVA virtual machine for invoking a PUSH interface to start up the corresponding JAVA application. In particular, the JAVA virtual machine acquires PUSH register information about the application from a preset PUSH register information list; and parses the PUSH register information about the application and starts up the corresponding JAVA application.

In summary, in the above technical solution according to the present invention, the transaction message sent by the UICC via the NFC chip is used to activate the PUSH function of JAVA and start up a relevant JAVA application, thereby realizing the purpose of automatically starting up the application, automatically displaying the consumption situation to the user and enhancing user experience.

Above description is only to illustrate the preferred embodiments but not to limit the present invention. Various alternations and changes to the present invention are apparent to those skilled in the art. Any modification, equivalent substitution and improvement made within the spirit and principle of the present invention should be included in the scope defined by the claims of the present invention.

## Claims

1. An application method for a mobile terminal electronic wallet with a near field communication (NFC) chip being integrated into the mobile terminal, comprising:
monitoring a transaction event carried out by the mobile terminal via the NFC chip;
when the transaction event happens, acquiring transaction message regarding the transaction event sent by a universal integrated circuit card (UICC) via the NFC chip; and
sending the transaction message to a JAVA module, starting up a corresponding JAVA application, and providing a consumption situation of the transaction event to a user.

2. The method according to claim 1, wherein sending the transaction message to a JAVA module and starting up a corresponding JAVA application further comprises:
the JAVA module receiving the transaction message and invoking a PUSH interface to start up the corresponding JAVA application.

3. The method according to claim 2, wherein invoking a PUSH interface to start up the corresponding JAVA application further comprises:
acquiring PUSH register information about the application from a set PUSH register information list; and
parsing the PUSH register information about the application and starting up the corresponding JAVA application.

4. A mobile terminal in which an NFC chip is integrated, comprising a JAVA module and further comprising a monitoring module, an acquiring module, a sending module, and a display module, wherein
the monitoring module is used for monitoring a transaction event carried out by the mobile terminal via the NFC chip;
the acquiring module is used for acquiring transaction message regarding the transaction event sent by a UICC via the NFC chip after the monitoring module monitors the transaction event;
the sending module is used for sending the transaction message to a JAVA module and starting up a corresponding JAVA application; and
the display module is used for providing a consumption situation regarding the transaction event to a user.

5. The mobile terminal according to claim 4, further comprising a JAVA virtual machine, wherein
the JAVA module is further used for receiving the transaction message and starting up the JAVA virtual machine; and
the JAVA virtual machine is used for invoking a PUSH interface to start up the corresponding JAVA application.

6. The mobile terminal according to claim 5, wherein the JAVA virtual machine is further used for acquiring PUSH register information about the application from a set PUSH register information list; and parsing the PUSH register information about the application and starting up the corresponding JAVA application.
